# EUROPÄISCHE PATENTSCHRIFT

(11) **EP 3 974 347 B1**
(45) Veröffentlichungstag und Bekanntmachung des Hinweises auf die Patenterteilung: **03.01.2024**
(21) Anmeldenummer: 21197887.9
(22) Anmeldetag: 21.09.2021
(51) Int. Cl.: B65G 1/02, A47B 96/14, F16B 12/50

(54) **REGALPANEEL MIT VERFORMUNG**
SHELF PANEL WITH DEFORMATION
PANNEAU DE RAYONNAGE POURVU DE DÉFORMATION

(30) Priorität: 28.09.2020 DE 102020125209
(43) Veröffentlichungstag der Anmeldung: 30.03.2022
(73) Patentinhaber: BITO-Lagertechnik Bittmann GmbH, 55590 Meisenheim (DE)
(72) Erfinder: MARTINI, Dennis, 55568 Staudernheim (DE)
(74) Vertreter: Richardt Patentanwälte PartG mbB

(56) Entgegenhaltungen:
- EP-A1- 2 062 502
- EP-A1- 3 239 073
- DE-A1-102010 038 968
- DE-U1- 9 010 342
- DE-U1-202011 101 479
- US-A- 6 050 428
- US-A1- 2017 164 740

## Beschreibung

Die Erfindung betrifft ein Regalpaneel für eine Traverse eines Regals, sowie ein Regal mit einem Regalpaneel.

Aus dem Stand der Technik sind viele Arten von Regalen bekannt. Beispielsweise offenbart die europäische Patentanmeldung EP 2 392 230 B1 ein Regal mit Regalpaneel mit einem U-förmigen Profil.

Die EP 2 062 502 A1 zeigt ein Regalpaneel mit einer nach oben gebogenen Lasche an dessen Endbereich US6050428 A offenbart ein Regalpaneel gemäß dem Oberbegriff des Anspruchs 1.

Der Erfindung liegt die Aufgabe zugrunde, ein Regalpaneel und ein Regal mit einem Regalpaneel zu schaffen. Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben. Es wird ein Regalpaneel für eine Traverse eines Regals beschrieben, wobei das Regalpaneel einen ersten Schenkel aufweist und durch den ersten Schenkel eine Lagerebene zur Lagerung von Stückgut gebildet wird, das Regalpaneel einen Befestigungsbereich zur Fixierung des Regalpaneels an der Traverse aufweist, und wobei das Material des ersten Schenkels am dem dem Befestigungsbereich zugewandten Ende des Regalpaneels eine Verformung aufweist und aufgrund der Verformung über die Lagerebene hinausragt.

Ausführungsformen könnten den Vorteil haben, dass aufgrund der über die Lagerebene hinausragenden Verformung eine Sicherung des zu lagernden Stückguts gegenüber etwaigem Herabfallen von dem Regalpaneel und damit dem Regal, bei welchem das Regalpaneel zum Einsatz kommt, gegeben sein könnte. Im gelagerten Zustand befindet sich das Stückgut auf einem oder mehreren Regalpaneelen, welche sich typischerweise in Richtung der Regaltiefe erstrecken. Kommt es zum Beispiel zu Erschütterungen des Regals zum Beispiel durch am Regal vorbeifahrende Transportfahrzeuge, könnten diese Erschütterungen eine Bewegung des gelagerten Stückguts bewirken. Durch das Vorsehen der Verformung hält diese die Bewegung des Stückguts in Richtung entgegen der Regaltiefe auf.

Bei der Erfindung erstreckt sich die Verformung senkrecht zur Haupterstreckungsrichtung des Regalpaneels mit einer Länge. Die Haupterstreckungsrichtung des Regalpaneels wird im verbauten Zustand im Regal z.B. der Richtung der Regaltiefe entsprechen.

Ferner hat die Verformung (insbesondere in der unten genannten Ausgestaltungsform als Aufwölbung) einen V-förmigen Querschnitt. Dies könnte den Vorteil haben, das es möglich ist, mit zumindest einem gewissen Kraftaufwand von beiden Seiten kommend (in Haupterstreckungsrichtung des Regalpaneels beim Ein- bzw. Auslagervorgang) Stückgut über die Verformung hinüber zu schieben. Selbst wenn zum Beispiel das Stückgut nicht vollständig über die Verformung hochgehoben wird und z.B. beim Hineinbefördern auf den durch die Lagerebene definierten Lagerplatz oder Hinausbefördern vom Lagerplatz mit der Verformung in Berührung kommen sollte, könnte das Stückgut mit entsprechenden Kraftaufwand an der Schräge der V-förmigen Verformung "hinaufwandern" und somit die Verformung überwinden. Im Ergebnis könnte aufgrund des V-förmigen Querschnitts ein Ein- und Auslagevorgang vereinfacht werden. Bei Ausgestaltung der Verformung als Aufwölbung mit V-förmigem Querschnitt lässt diese sich mittels eines V-förmigen, also spitz zulaufenden, ausformenden Teils auch besonders leicht ausbilden.

Nach einer Ausführungsform handelt es sich bei der Verformung um eine Aufwölbung. Das Vorsehen einer Aufwölbung könnte mehrere Vorteile haben. Ein erster Vorteil könnte in einer einfachen Herstellbarkeit liegen, da beispielsweise durch Aufbringen eines Stempels auf die Rückseite des ersten Schenkels die Aufwölbung als eine Ausbuchtung kostengünstig realisiert werden könnte. Im Vergleich mit z.B. einer nach oben geformten Lasche als Verformung könnte eine Aufwölbung ferner den Vorteil haben, dass dadurch scharfkantige Ecken vermieden werden, an welcher ein- bzw. auszulagerndes Stückgut beim Ein- oder Auslagervorgang hängen bleiben könnte, sofern das Stückgut nicht vollständig über die Verformung gehoben wird.

Nach einer Ausführungsform weist die Verformung (insbesondere in der Ausgestaltungsform als Aufwölbung) eine Breite auf, wobei die Länge größer ist als die Breite. Dies könnte den Vorteil haben, dass der zur Realisierung der Verformung! Aufwölbung notwendige Materialaufwand gering gehalten werden kann, wobei dennoch eine breite Angriffsfläche zum "Stoppen" einer etwaigen Behälterbewegung gewährleistet wird.

Nach einer Ausführungsform beträgt das Verhältnis von Länge und Breite zwischen 2 und 8, vorzugsweise zwischen 3 und 4.

Nach einer Ausführungsform weist der erste Schenkel senkrecht zur Haupterstreckungsrichtung des Regalpaneels eine Schenkelbreite auf, wobei die Länge der Erstreckung der Verformung höchstens 80%, vorzugsweise höchstens 60% der Schenkelbreite beträgt. Dies könnte den Vorteil haben, dass einerseits genügend Material zur Bildung einer Anschlagfläche für das zu stoppende Stückgut gegeben ist, andererseits jedoch die Grundstruktur des ersten Schenkels hierdurch nicht verändert wird. Das Regalpaneel kann also in gewohnter Weise gefertigt werden und die Verformung kann nachträglich eingebracht werden, ohne dass dies zu einer wesentlichen Veränderung der statischen Eigenschaften des Regalpaneels führen würde. Im Vergleich zu einer sich z.B. über die gesamte Breite des Schenkels erstreckenden Verformung könnte die Beschränkung der Verformung auf den genannten Teil der Schenkelbreite sogar zu einer Versteifung des Schenkels an dieser Stelle führen, sodass insgesamt die Gesamtstabilität des Regalpaneels weiter erhöht wird.

Nach einer Ausführungsform ragt die Aufwölbung mit einer Höhe über die Lagerebene hinaus, wobei die Höhe zwischen 30 % und 70 % der Breite der Aufwölbung beträgt. Hierbei könnte es sich um einen optimalen Kompromiss zwischen einerseits einer aus der Aufwölbung resultierenden Materialschwächung aufgrund der Dehnung des Materials des Schenkels in diesem Verformungsbereich, und andererseits der Ermöglichung einer Stoppfunktionalität gegenüber einem unbeabsichtigten Herausbewegen von durch das Regalpaneel abgestütztem Stückgut entgegen der Einlagerungsrichtung handeln.

Nach einer Ausführungsform weist das Regalpaneel in seiner Haupterstreckungsrichtung (z.B. Einlagerungsrichtung) eine Erstreckungslänge auf, wobei ausgehend von dem dem Befestigungsbereich zugewandten Ende des Regalpaneels das Material des ersten Schenkels die Verformung im ersten 30stel, vorzugweise im ersten 60stel der Erstreckungslänge aufweist.

Wie bereits oben erwähnt könnte bei entsprechender Ausgestaltung der Verformung nebst einer Stoppfunktion der Verformung auch noch die Funktion der Erhöhung der Steifigkeit des Regalpaneels in diesem Bereich zukommen. Wenn nun die Verformung im ersten 30stel, vorzugweise im ersten 60stel der Erstreckungslänge gegeben ist, so könnte das Regalpaneel in besonders stabiler Weise mit zum Beispiel einer Traverse eines Regals verbunden werden. Einerseits sorgt der Verbindungspunkt zwischen Regalpaneel und Traverse unter Umständen für eine dortige Schwächung des Regalpaneels, da entsprechende Aussparungen im Regalpaneel für zum Beispiel Befestigungsmittel vorgesehen werden müssen. Andererseits könnte die Verformung in diesem Bereich einen etwaigen Mangel an Stabilität mit erhöhter Steifigkeit des Regalpaneels ausgleichen.

Nach einer Ausführungsform weist das Regalpaneel ein U-Profil auf mit zwei einander gegenüberliegenden senkrechten zweiten Schenkeln und dem die senkrechten Schenkel verbindenden waagerechten ersten Schenkel, wobei die senkrechten zweiten Schenkel des Regalpaneels an dem Ende des Paneels Befestigungsmittel zur Fixierung des Regalpaneels an der Traverse aufweisen, wobei der Befestigungsbereich durch die Befestigungsmittel gegeben ist.

In einem weiteren Aspekt betrifft die Erfindung ein Regal zum Lagern von Stückgut, mit Regalstützen, einer ersten Traverse und einer zweiten Traverse, wobei die Traversen einander gegenüberliegen und in Regallängsrichtung verlaufen und wobei die Traversen in Regalquerrichtung über zwei voneinander beabstandete Regalpaneele, wie obig beschrieben, verbunden sind.

Es sei angemerkt, dass die obig beschriebenen Varianten in beliebiger Weise miteinander kombiniert werden können, sofern sich diese Varianten in Kombination nicht gegenseitig ausschließen.

Im Folgenden werden bevorzugte Ausführungsformen der Erfindung anhand der Zeichnungen näher erläutert. Es zeigen:
- Figur 1: ein Regal mit Regalpaneelen und Traversen,
- Figur 2: ein Regalpaneel,
- Figur 3: einen Montagevorgang eines Regalpaneels in einer Traverse,
- Figur 4: eine Detailansicht eines Regalpaneels,
- Figur 5: eine Querschnittsansicht eines Regalpaneels,
- Figur 6: eine Längsschnittansicht eines Regalpaneels,
- Figur 7: eine perspektivische Ansicht eines Regals mit Behälter.

Im Folgenden werden einander ähnliche Elemente mit den gleichen Bezugszeichen gekennzeichnet.

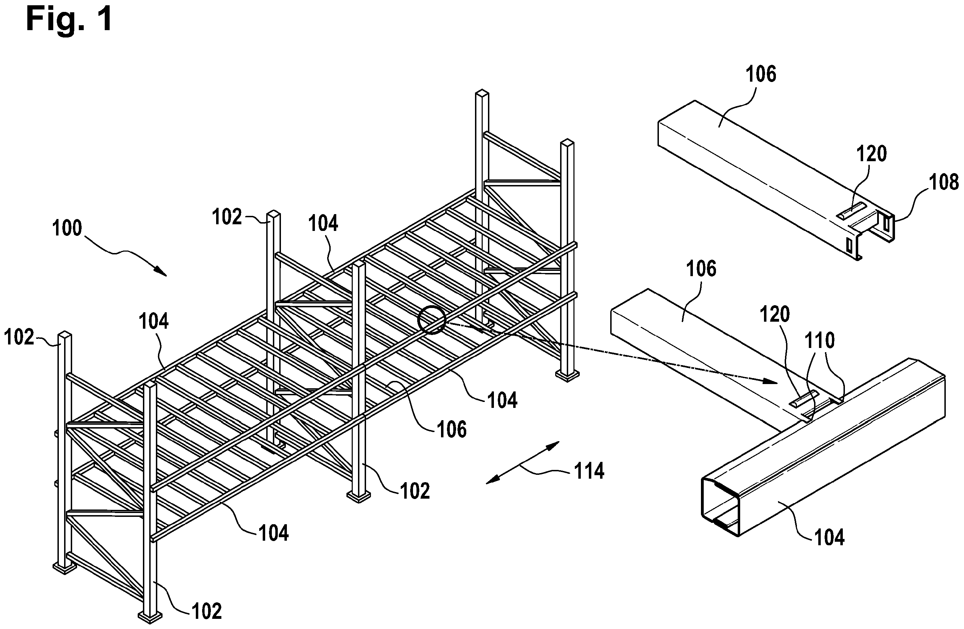

Die Figur 1 zeigt ein Regal 100 mit in Regallängsrichtung 120 verlaufenden Traversen 104. Die Traversen sind über bekannte Befestigungsmittel bzw. Befestigungsarten an entsprechenden Verstrebungen 102 des Regals 100 befestigt.

Die Traversen 104 sind über Regalpaneele 106 miteinander verbunden. Einander jeweils gegenüberliegende Traversen 104 werden jeweils z.B. durch mehrere senkrecht dazu angeordnete Regalpaneele 106 miteinander verbunden. Hierzu werden jeweils die Enden 108 der Regalpaneele in entsprechende Aussparungen 110 der Traversen 104 eingesteckt.

Die Oberseite der Regalpaneele 106 bildet eine Lagerebene zur Lagerung von Stückgut. Die Regalpaneele weisen im Bereich der Enden 108 nach oben weisende, d. h. die Lagerebene überragende und sich über die Lagerebene erhebende Verformungen 120 auf. Durch diese Verformungen könnte verhindert werden, dass auf den Regalpaneelen 106 gelagertes Stückgut bei Bewegungen des Regals 100, zum Beispiel aufgrund von Vibrationen, entgegen der Einlagerungsrichtung "wandert" und dadurch vom Regal fallen könnte.

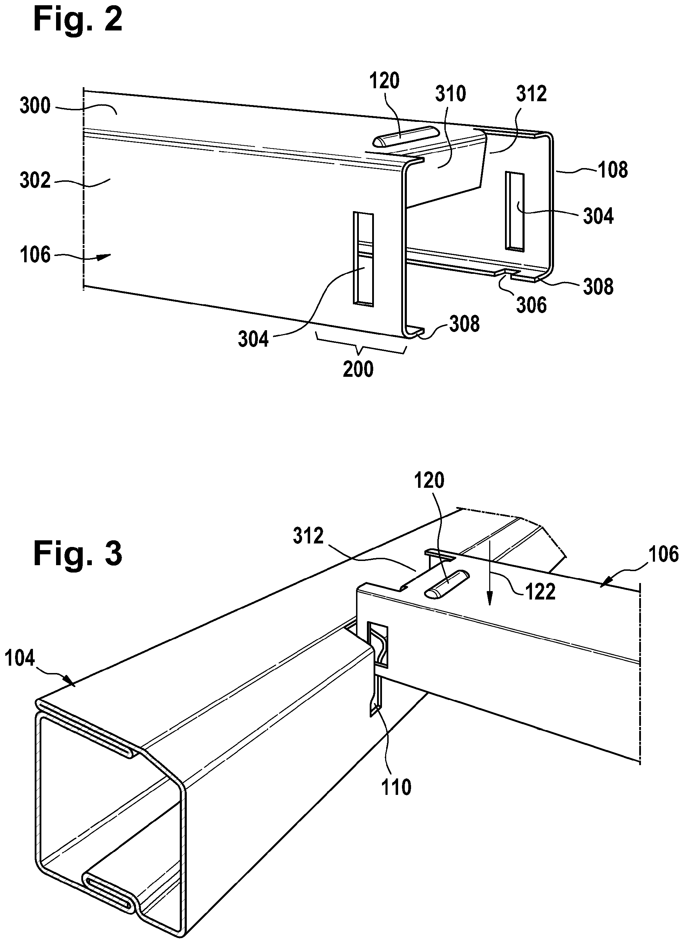

Die Figur 2 zeigt ein Ende 108 eines Regalpaneels 106, welches in entsprechende Aussparungen 110 der Traverse 104, wie in Figur 1 gezeigt, eingesetzt werden kann.

Das Regalpaneel weist eine U-Form auf, welches zwei einander gegenüberliegende senkrechte Schenkel 302 und einen die senkrechten Schenkel 302 verbindenden waagerechten Schenkel 300 umfasst. Die senkrechten Schenkel 302 weisen zumindest an dem Ende 108 des Paneels einander gegenüberliegende Öffnungen 304 auf, wobei die Öffnungen vollständig vom Material der senkrechten Schenkel 302 umschlossen sind. Zusätzlich sind die senkrechten Schenkel 302 zumindest im Bereich der Öffnungen an ihrem vom waagerechten Schenkel wegweisenden Ende rechtwinklig nach innen gebogen, sodass sich die mit dem Bezugszeichen 308 gekennzeichneten Elemente der senkrechten Schenkel ergeben.

Zusätzlich weist das Regalpaneel 106 an seinem Ende 108 am waagerechten Schenkel eine Aussparung 312 auf, wobei sich die Aussparung in Erstreckungsrichtung des Paneels vollständig bis zum Ende der senkrechten Schenkel des Paneels erstreckt. Allerdings ist im Bereich der Aussparung 312 der waagerechte Schenkel 300 nicht vollständig ausgespart, sondern es besteht hier noch ein Rand, sodass sich in Verbindung mit den Elementen 308 im Endbereich 108 des Regalpaneels eine U-Form ergibt.

Ferner ersichtlich ist in Figur 2, dass die rechtwinklig nach innen gebogenen Teile 308 der Schenkel im Bereich der Öffnungen 304 weitere Aussparungen 306 aufweisen. Auch ersichtlich in Figur 3 ist, dass am Rand der Aussparung 312 der waagerechte Schenkel von dem Ende des Paneels wegweisend in Richtung des Bereichs zwischen den senkrechten Schenkel 302 hin geneigt ist, wodurch sich das Element 310 des waagerechten Schenkels 300 ergibt. Dieses Grundprinzip ist aus der EP 2 392 230 B1 bekannt.

Der waagerechte Schenkel 300 weist an dem dem Befestigungsbereich 200 zugewandten Ende 108 des Regalpaneels 106 eine Verformung, nähmlich eine Aufwölbung 120. Diese erhebt sich über die Lagerebene, welche durch den restlichen Bereich des waagerechten Schenkels 300 definiert wird.

Es sei angemerkt, dass im vorliegenden Fall eine sehr spezifische Art des Befestigungsbereichs zur Fixierung des Regalpaneels an einer Traverse gezeigt ist. Der Fachmann versteht jedoch, dass das Vorsehen der Verformung 120 unabhängig von der hier ersichtlichen Ausgestaltung des Befestigungsbereichs ist. Möglich ist zum Beispiel, dass der Befestigungsbereich durch Schraubenelemente und hierzu eventuell erforderlicher Winkelprofile zur Fixierung des Regalpaneels an der Traverse realisiert sein könnte.

Die Verformung ist zum Beispiel dergestalt an dem dem Befestigungsbereich zugewandten Ende 108 des Regalpaneels 106 angeordnet, dass hinter dieser Verformung 120, d. h. in Einlagerungsrichtung von der Verformung wegweisend ausreichend Platz zum Aufsetzen des zu lagernden Stückguts auf dem Regalpaneel gegeben ist. Bei dem Stückgut könnte es sich zum Beispiel um Kartons, Kisten oder Paletten oder Ähnliches handeln.

Die Figur 3 zeigt einen Abschnitt eines Montagevorgangs eines Regalpaneels 106 an einer Traverse 104. Zunächst wird das Ende 108 des Regalpaneels 106 an die Traverse 104 herangeführt und mit den Schenkeln 302 in Richtung 122 in die Aussparungen 110 der Traverse hineingedrückt. Aufgrund einer geneigten Kante der Aussparung 110 ergibt sich beim Einsetzen des Regalpaneels eine Zwangsführung der senkrechten Schenkel 302, sodass diese federartig aufeinander gedrängt werden. Durch das Eingreifen der besagten Kante der Aussparung in die Aussparung 306 ist nun ein Herausrutschen des Regalpaneels 106 aus der Öffnung 110 in Erstreckungsrichtung des Regalpaneels nicht mehr möglich.

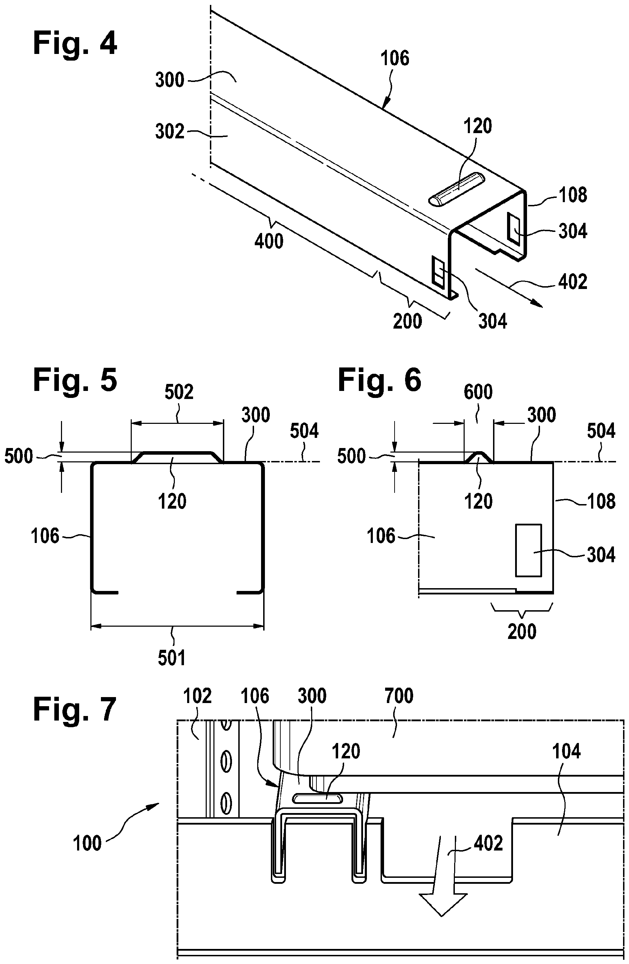

Figur 4 zeigt eine perspektivische Ansicht eines Regalpaneels 106 mit einem Schenkel 300, durch welchen eine Lagerebene zur Lagerung von Stückgut gebildet wird. Ein Befestigungsbereich 200 dient dazu, das Regalpaneel an einer entsprechenden Traverse des Regals zu befestigten.

Der Befestigungsbereich 200 befindet sich an einem Ende 108 des Regalpaneels 106. An dem dem Befestigungsbereich 200 zugewandten Ende 108 des Regalpaneels 106 weist das Material des Schenkels 300 eine Verformung 120 auf. Diese Verformung 120 entspricht im Beispiel der Figur 4 einer quer zur Haupterstreckungsrichtung des Regalpaneels verlaufenden Aufwölbung. Diese Aufwölbung erstreckt sich über die durch den Schenkel 300 definierte Lagerebene. Im Bereich 400 auf dem Schenkel gelagertes Stückgut, wie zum Beispiel eine Kiste, wird aufgrund des durch die Aufwölbung 120 gebildeten Anschlags daran gehindert, sich in Richtung 402, d. h. entgegen der Einlagerrichtung, zu bewegen, während es Kontakt mit der durch den Schenkel 300 definierten Lagerfläche oder Lagerebene hat, also darauf liegt.

Ein Auslagevorgang ist also nur dann problemlos und widerstandslos möglich, wenn das Stückgut so weit von der Lagerebene abgehoben wird, dass es sich oberhalb der Oberkante der Aufwölbung 120 befindet. Ist dies nicht gewährleistet, könnte trotzdem mit gewissem Kraftaufwand aufgrund der V-förmigen Ausgestaltung der Aufwölbung das Stückgut an der quer verlaufenden Wand der Aufwölbung entlang nach schräg oben gezogen werden, sodass dadurch das Stückgut an der V-förmigen schrägen Wand nach oben wandert und dadurch die Aufwölbung überwinden kann.

Figur 5 zeigt eine Querschnittsansicht eines Regalpaneels 106. Die Aufwölbung 120 weist eine Länge 502 auf, welche höchstens 80 %, vorzugsweise höchstens 60 % der Breite 501 des Schenkels 300 beträgt. Die Höhe 500 der Aufwölbung beträgt zwischen 30 % und 70 % der in der Längsschnittansicht der Figur 6 ersichtlichen Breite 600 der Aufwölbung 120. Sowohl in Figur 5 als auch in Figur 6 ist jeweils die Lage der Lagerebene 504 eingezeichnet, auf welcher Stückgut zu liegen kommt.

In der Längsschnittansicht der Figur 6 ist die V-Form der Aufwölbung deutlich zu erkennen. Die Aufwölbung befindet sich am dem Befestigungsbereich 200 zugewandten Ende 108 des Regalpaneels 106. Die Aufwölbung ragt mit ihrer Höhe 500 über die Ebene 504 hinaus, welche zur Lagerung von Stückgut durch den Schenkel 300 gebildet wird.

Figur 7 zeigt eine perspektivische Ansicht eines Regals 100 mit einer Regalstütze 102 und daran befestigter Traverse 104. An der Traverse ist ein Regalpaneel 106 befestigt, z.B. eingesteckt oder verschraubt. Das Regalpaneel 106 weist an seiner oberen Fläche 300, also dem Schenkel, durch welchen eine Lagerebene zur Lagerung von Stückgut gebildet wird, eine Aufwölbung 120 auf. Stückgut, z.B. ein Lagerbehälter 700, welcher sich auf der Regalstrebe 120 befindet wird aufgrund der Aufwölbung 120 daran gehindert, in Richtung 402, d.h. entgegen der Einlagerrichtung zu rutschen und damit etwaig vom Regal zu fallen.

### Bezugszeichenliste

- 100: Regal
- 102: Strebe
- 104: Traverse
- 106: Regalpaneel
- 108: Ende
- 110: Aussparung
- 120: Verformung
- 122: Richtung
- 300: Fläche
- 302: Fläche
- 304: Öffnung
- 306: Aussparung
- 308: Vorsprung
- 310: geneigter Schenkel
- 312: Aussparung
- 400: Bereich
- 402: Richtung
- 500: Höhe
- 501: Schenkelbreite
- 502: Länge
- 504: Lagerebene
- 600: Breite
- 700: Stückgut

## Patentansprüche

1. Regalpaneel (106) für eine Traverse (104) eines Regals, wobei
- das Regalpaneel (106) einen ersten Schenkel (300) aufweist und durch den ersten Schenkel (300) eine Lagerebene (504) zur Lagerung von Stückgut gebildet wird,
- das Regalpaneel (106) einen Befestigungsbereich (200) zur Fixierung des Regalpaneels (106) an der Traverse (104) aufweist,
- das Material des ersten Schenkels (300) am dem dem Befestigungsbereich (200) zugewandten Ende (108) des Regalpaneels (106) eine Verformung (120) aufweist und aufgrund der Verformung (120) über die Lagerebene (504) hinausragt, wobei die Verformung (120) einen V-förmigen Querschnitt hat, **dadurch gekennzeichnet, dass** sich die Verformung (120) senkrecht zur Haupterstreckungsrichtung des Regalpaneels (106) mit einer Länge (502) erstreckt.

2. Regalpaneel (106) nach Anspruch 1, wobei die Verformung (120) eine Breite (600) aufweist, wobei die Länge (502) größer als die Breite (600) ist.

3. Regalpaneel (106) nach Anspruch 2, wobei das Verhältnis von Länge (502) und Breite (600) zwischen 2 und 8, vorzugweise zwischen 3 und 4 beträgt.

4. Regalpaneel (106) nach einem der vorigen Ansprüche 1 bis 3, wobei es sich bei der Verformung um eine Aufwölbung (120) handelt.

5. Regalpaneel (106) nach einem der vorigen Ansprüche 2-4, wobei der erste Schenkel (300) senkrecht zur Haupterstreckungsrichtung des Regalpaneels (106) eine Schenkelbreite (501) aufweist, wobei die Länge (502) der Erstreckung der Verformung (120) höchstens 80%, vorzugsweise höchstens 60% der Schenkelbreite (501) beträgt.

6. Regalpaneel (106) nach einem der vorigen Ansprüche, wobei die Aufwölbung (120) mit einer Höhe (500) über die Lagerebene (504) hinausragt, wobei die Höhe (500) zwischen 30% und 70% der Breite (600) beträgt.

7. Regalpaneel (106) nach einem der vorigen Ansprüche, wobei das Regalpaneel (106) in seiner Haupterstreckungsrichtung eine Erstreckungslänge aufweist, wobei ausgehend von dem dem Befestigungsbereich (200) zugewandten Ende (108) des Regalpaneels (106) das Material des ersten Schenkels (300) die Verformung (120) im ersten 30stel, vorzugweise im ersten 60stel der Erstreckungslänge aufweist.

8. Regalpaneel (106) nach einem der vorigen Ansprüche, wobei das Regalpaneel (106) ein U-Profil aufweist mit zwei einander gegenüberliegenden senkrechten zweiten Schenkeln (302) und dem die senkrechten Schenkel (302) verbindenden waagerechten ersten Schenkel (300), wobei die senkrechten Schenkel (302) des Regalpaneels (106) an dem Ende (108) des Paneels Befestigungsmittel zur Fixierung des Regalpaneels (106) an der Traverse (104) aufweisen, wobei der Befestigungsbereich (200) durch die Befestigungsmittel gegeben ist.

9. Regal (100) zum Lagern von Stückgut, mit Regalstützen (102), einer ersten Traverse (104) und einer zweiten Traverse (104), wobei die Traversen (104) einander gegenüberliegen und in Regallängsrichtung verlaufen und wobei die Traversen (104) in Regalquerrichtung über zwei voneinander beabstandete Regalpaneele (106) nach einem der vorigen Ansprüche verbunden sind.

## Claims

1. A shelf panel (106) for a cross member (104) of a shelf unit, wherein
- the shelf panel (106) has a first limb (300) and a storage plane (504) for storing items is formed by the first limb (300),
- the shelf panel (106) has a fastening region (200) for fixing the shelf panel (106) to the cross member (104),
- the material of the first limb (300), at the end (108) of the shelf panel (106) facing the fastening region (200), has a deformation (120) and projects beyond the storage plane (504) on account of the deformation (120), wherein the deformation (120) has a V-shaped cross section, **characterised in that** the deformation (120) extends perpendicularly to the main direction of extent of the shelf panel (106) with a length (502).

2. The shelf panel (106) according to claim 1, wherein the deformation (120) has a width (600), wherein the length (502) is greater than the width (600).

3. The shelf panel (106) according to claim 2, wherein the ratio of length (502) and width (600) is between 2 and 8, preferably between 3 and 4.

4. The shelf panel (106) according to any one of preceding claims 1 to 3, wherein the deformation is a hump (120).

5. The shelf panel (106) according to any one of preceding claims 2-4, wherein the first limb (300) has a limb width (501) perpendicular to the main direction of extent of the shelf panel (106), wherein the length (502) of the extent of the deformation (120) is at most 80%, preferably at most 60% of the limb width (501).

6. The shelf panel (106) according to any one of the preceding claims, wherein the hump (120) projects with a height (500) beyond the storage plane (504), wherein the height (500) is between 30% and 70% of the width (600).

7. The shelf panel (106) according to any one of the preceding claims, wherein the shelf panel (106) has a length of extent in its main direction of extent, wherein, starting from the end (108) of the shelf panel (106) facing the fastening region (200), the material of the first limb (300) has the deformation (120) in the first 30^{th}, preferably in the first 60^{th} of the length of extent.

8. The shelf panel (106) according to any one of the preceding claims, wherein the shelf panel (106) has a U-profile with two perpendicular second limbs (302) opposite one another and the horizontal first limb (300) connecting the perpendicular limbs (302), wherein the perpendicular limbs (302) of the shelf panel (106) have fastening means at the end (108) of the panel for fixing the shelf panel (106) to the cross member (104), wherein the fastening region (200) is provided by the fastening means.

9. A shelf unit (100) for storing items, comprising shelf supports (102), a first cross member (104) and a second cross member (104), wherein the cross members (104) run opposite one another and in a shelf-unit longitudinal direction, and wherein the cross members (104) are connected in the shelf-unit transverse direction via two shelf panels (106) spaced apart from one another according to any one of the preceding claims.

## Revendications

1. Panneau d'étagère (106) pour une traverse (104) d'une unité d'étagère, dans lequel
- le panneau d'étagère (106) a un premier membre (300) et un plan de rangement (504) pour le rangement d'objets est formé par le premier membre (300),
- le panneau d'étagère (106) a une région de fixation (200) pour la fixation du panneau d'étagère (106) à la traverse (104),
- le matériau du premier membre (300), au niveau de l'extrémité (108) du panneau d'étagère (106) faisant face à la région de fixation (200), a une déformation (120) et se projette au-delà du plan de rangement (504) en réponse à la déformation (120), dans lequel la déformation (120) a une section transversale en V, **caractérisé en ce que** la déformation (120) s'étend perpendiculairement à la direction principale d'extension du panneau d'étagère (106) avec une longueur (502).

2. Panneau d'étagère (106) selon la revendication 1, dans lequel la déformation (120) a une largeur (600), dans lequel la longueur (502) est supérieure à la largeur (600) .

3. Panneau d'étagère (106) selon la revendication 2, dans lequel le rapport de la longueur (502) et de la largeur (600) est compris entre 2 et 8, préférentiellement entre 3 et 4.

4. Panneau d'étagère (106) selon l'une quelconque des revendications 1 à 3, dans lequel la déformation est un renflement (120).

5. Panneau d'étagère (106) selon l'une quelconque des revendications 2 à 4 précédentes, dans lequel le premier membre (300) a une largeur de membre (501) perpendiculaire à la direction principale d'extension du panneau d'étagère (106), dans lequel la longueur (502) de l'extension de la déformation (120) est au maximum de 80 %, préférentiellement au maximum de 60 % de la largeur du membre (501).

6. Panneau d'étagère (106) selon l'une quelconque des revendications précédentes, dans lequel le renflement (120) se projette avec une hauteur (500) au-delà du plan de rangement (504), dans lequel la hauteur (500) est comprise entre 30 % et 70 % de la largeur (600).

7. Panneau d'étagère (106) selon l'une quelconque des revendications précédentes, dans lequel le panneau d'étagère (106) a une longueur d'extension dans sa direction principale d'extension, dans lequel, en partant de l'extrémité (108) du panneau d'étagère (106) faisant face à la région de fixation (200), le matériau du premier membre (300) a la déformation (120) dans le premier 30^{e}, préférentiellement dans le premier 60^{e} de la longueur de l'extension.

8. Panneau d'étagère (106) selon l'une quelconque des revendications précédentes, dans lequel le panneau d'étagère (106) a un profil en U avec deux seconds membres perpendiculaires (302) opposés l'un à l'autre et le premier membre horizontal (300) reliant les membres perpendiculaires (302), dans lequel les membres perpendiculaires (302) du panneau d'étagère (106) ont des moyens de fixation au niveau de l'extrémité (108) du panneau pour la fixation du panneau d'étagère (106) à la traverse (104), dans lequel la région de fixation (200) est pourvue par le moyen de fixation.

9. Unité d'étagère (100) pour le rangement d'objets, comprenant des supports d'étagère (102), une première traverse (104) et une seconde traverse (104), dans laquelle les traverses (104) courent en opposition l'une à l'autre et dans une direction longitudinale de l'unité d'étagère, et dans laquelle les traverses (104) sont reliées dans la direction transversale de l'unité d'étagère au moyen de deux panneaux d'étagère (106) espacés l'un de l'autre selon l'une quelconque des revendications précédentes.
